# EUROPÄISCHE PATENTSCHRIFT

(11) **EP 3 465 851 B1**
(45) Veröffentlichungstag und Bekanntmachung des Hinweises auf die Patenterteilung: **29.07.2020**
(21) Anmeldenummer: 17735043.6
(22) Anmeldetag: 26.06.2017
(51) Int. Cl.: H02G 1/06, H02G 9/08, H02G 5/06

(54) **VERFAHREN ZUM INSTALLIEREN EINER GASISOLIERTEN ELEKTRISCHEN ÜBERTRAGUNGSLEITUNG IN EINEM TUNNEL**
METHOD FOR INSTALLING A GAS-INSULATED ELECTRICAL TRANSMISSION LINE
PROCÉDÉ POUR METTRE EN PLACE UNE LIGNE DE TRANSMISSION ÉLECTRIQUE À GAZ ISOLANT

(30) Priorität: 20.07.2016 DE 102016213245
(43) Veröffentlichungstag der Anmeldung: 10.04.2019
(73) Patentinhaber: Siemens Aktiengesellschaft, 80333 München (DE)
(72) Erfinder: EBNER, Andreas, 90419 Nürnberg (DE); IMAMOVIC, Denis, 90409 Nürnberg (DE); HAUSMANN, Bruno, 90489 Nürnberg (DE)
(86) Internationale Anmeldenummer: PCT/EP2017/065632
(87) Internationale Veröffentlichungsnummer: WO 2018/015105

(56) Entgegenhaltungen:
- DE-A1- 19 627 381
- JP-A- H09 121 437
- JP-A- H10 155 219
- Siemens: "Gas-insulated transmission lines (GIL)", , 13. August 2010 (2010-08-13), Seiten 1-8, XP055034550, Gefunden im Internet: URL:http://www.energy.siemens.com/hq/pool/ hq/power-transmission/gas-insulated-transm ission-lines/GIL_e.pdf [gefunden am 2012-08-02]

## Beschreibung

Die Erfindung bezieht sich auf ein Verfahren zum Installieren einer gasisolierten elektrischen Übertragungsleitung in einem Tunnel, wobei bei dem Verfahren eine Vielzahl an Leitungsmodulen unter Bildung der Übertragungsleitung zusammengesetzt werden.

Bisher werden Leitungsmodule, die jeweils eine Länge von einigen Metern bis üblicherweise maximal 20 Metern aufweisen, in einem Schacht im Bereich des Tunnelanfangs oder - im Falle einer oberirdischen Tunnelöffnung - im Bereich der oberirdischen Tunnelöffnung zu einem Strang verschweißt. Der während der Schweißschritte entstehende Leitungsstrang wird nach jedem Verschweißschritt jeweils um die Leitungslänge des jeweils angeschweißten Leitungsmoduls mit einer Winde in den Tunnel hineingezogen und anschließend wird das jeweils nächste Leitungsmodul an das zuvor neu gebildete Strangende angeschweißt. Diese Vorgehensweise hat zur Folge, dass das vordere Leitungsende des Leitungsstrangs vom vorderen Tunnelende durch den gesamten Tunnel hindurch bis zum entfernten Tunnelende gezogen werden muss; diese Vorgehensweise ist zeitaufwändig und risikobehaftet, weil es zu einem Auseinanderbrechen des Leitungsstranges kommen kann, insbesondere dann, wenn die Tunnellänge eine Länge von einem Kilometer überschreitet.

Ein verbessertes, artgemäßes Verfahren ist zudem aus der JP H10 155 219 A bekannt.

Der Erfindung liegt die Aufgabe zugrunde, ein Verfahren zum Installieren einer gasisolierten elektrischen Übertragungsleitung anzugeben, das weniger zeitaufwändig und mit Blick auf eine Bruchgefahr risikoloser als bisherige Verfahren durchführbar ist.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass in einem Vorfertigungsschritt Gruppen von Leitungsmodulen unter Bildung von Strangsegmenten verbunden werden, die vorgefertigten Strangsegmente zu ihren individuell vorgegebenen Einbauplätzen innerhalb des Tunnels transportiert werden und die beiden Strangenden der Strangsegmente im Tunnel jeweils mit den Strangenden der davor und dahinter liegenden Strangsegmente verbunden werden.

Ein wesentlicher Vorteil des erfindungsgemäßen Verfahrens ist darin zu sehen, dass auf ein Einziehen eines kompletten Leitungsstrangs mit einer Winde oder dergleichen verzichtet werden kann; denn erfindungsgemäß ist vorgesehen, Strangsegmente vorzufertigen und diese individuell zu vorgegebenen Einbauplätzen innerhalb des Tunnels zu transportieren und die Verbindung der Strangsegmente miteinander erst anschließend innerhalb des Tunnels individuell am jeweiligen Einbauort durchzuführen.

Ein weiterer wesentlicher Vorteil des erfindungsgemäßen Verfahrens besteht darin, dass das Herstellen von Strangsegmenten, das Transportieren vorgefertigter Strangsegmente an den jeweiligen Einbauort und das Zusammensetzen der bereits vorgefertigten Strangsegmente an dem jeweiligen Einbauort gleichzeitig erfolgen kann, so dass die Installationszeit minimiert werden kann.

Vorteilhaft ist es, wenn die Strangsegmente mit einem Transportfahrzeug nacheinander an ihren jeweiligen Einbauplatz gefahren werden und jeweils nach Erreichen ihres Einbauplatzes mit ihrem einen Strangende mit dem Strangende des davor (also dichter am Ort der Vorfertigung der Strangsegmente) liegenden Strangsegments verbunden werden.

Die Strangsegmente werden vorzugsweise miteinander verschraubt. Um ein Verschrauben zu vereinfachen, werden die Strangenden vorzugsweise jeweils mit einem Flansch zur Bildung einer Flansch-Schraubverbindung ausgestattet.

Im Tunnel sind vorzugsweise Schienen verlegt; bei einer solchen Tunnelausgestaltung werden die Strangsegmente bevorzugt mit einem Schienenfahrzeug an ihren jeweiligen Einbauplatz gefahren.

Das Transportfahrzeug weist vorzugsweise eine Hebeeinrichtung auf. Die Strangsegmente werden vorzugsweise mittels dieser Hebeeinrichtung in ihre jeweilige im Tunnel vorgesehene Einbauhöhe angehoben.

Vorteilhaft ist es, wenn die Strangsegmente mit dem Transportfahrzeug zunächst an ihren jeweiligen Einbauplatz gefahren werden und anschließend an ihrem Einbauplatz mittels einer fahrzeugseitigen Hebeeinrichtung jeweils in ihre vorgesehene Einbauhöhe angehoben werden, sofern die Transporthöhe auf dem Fahrzeug kleiner ist als die Einbauhöhe.

Der Tunnel ist innenwandseitig vorzugsweise mit Aufnahmeeinrichtungen ausgestattet, die zum Halten der Strangsegmente an deren jeweiligem Einbauort ausgebildet sind. Die Strangsegmente werden nach Transport zum Einbauort bevorzugt in diese Aufnahmeeinrichtungen eingesetzt.

Die Strangsegmente werden im Rahmen des Einsetzens in die Aufnahmeeinrichtungen vorzugsweise vertikal angehoben und/oder horizontal bewegt und/oder in Tunnellängsrichtung bewegt.

Im Rahmen des Einsetzens der Strangsegmente in die Aufnahmeeinrichtungen werden die Strangsegmente mittels des Transportfahrzeugs, insbesondere mittels einer Schiebeeinrichtung des Transportfahrzeugs, und/oder mittels der Aufnahmeeinrichtungen bevorzugt zumindest auch horizontal verschoben.

Die Aufnahmeeinrichtungen weisen bevorzugt Teleskopausleger auf. Derartige Teleskopausleger werden vor dem horizontalen Bewegen der Strangsegmente vorzugsweise ausgefahren, und die Strangsegmente werden vorzugsweise horizontal auf die ausgefahrenen Teleskopausleger aufgeschoben.

Auch ist es vorteilhaft, wenn im Rahmen des Einsetzens der Strangsegmente in die Aufnahmeeinrichtungen die Strangsegmente mittels einer Hebeeinrichtung des Transportfahrzeugs zunächst angehoben und anschließend in Tunnellängsrichtung bewegt, insbesondere verschoben und in Tunnellängsrichtung in eine zugeordnete Aufnahmeeinrichtung eingeschoben, werden.

Die Leitungsmodule weisen eine Länge zwischen 5 und 15 Meter auf. Im Rahmen der Vorfertigung werden Strangsegmente mit einer Länge zwischen 100 und 1000 Meter gefertigt.

Die Leitungsmodule weisen jeweils ein innen liegendes Innenrohr und ein Mantelrohr auf: Im Rahmen der Vormontage werden jeweils die Innenrohre und die Mantelrohre der Leitungsmodule elektrisch miteinander verbunden; im Rahmen des Verbindens der Strangsegmente im Tunnel werden die Innenrohre und die Mantelrohre der Strangsegmente elektrisch miteinander verbunden.

Der Vorfertigungsschritt kann an einem unterirdischen Fertigungsplatz erfolgen, der mit dem Tunnel in Verbindung steht oder einen Teilabschnitt des Tunnels bildet. Alternativ kann der Vorfertigungsschritt an einem oberirdischen Fertigungsplatz erfolgen; bei einer solchen Ausgestaltung werden die Strangsegmente vorzugsweise an einem oberirdischen Tunnelende in den Tunnel hineintransportiert.

Bei einer besonders vorteilhaften Ausgestaltung des Verfahrens ist vorgesehen, dass in dem Vorfertigungsschritt mit Leitungsmodulen Strangsegmente gebildet werden, die in der Übertragungsleitung innere Strangsegmente bilden, sowie zwei Strangsegmente gebildet werden, die in der Übertragungsleitung äußere Strangsegmente bilden. Die inneren Strangsegmente werden jeweils mit dem Strangende des vorgelagerten Strangsegments und dem Strangende des jeweils nachgelagerten Strangsegments verbunden, und die beiden äußeren Strangsegmente werden jeweils nur mit dem zugeordneten vor- oder nachgelagerten Strangsegment verbunden.

Die Erfindung bezieht sich darüber hinaus auf ein Transportfahrzeug, das für ein Installationsverfahren, wie es oben beschrieben ist, geeignet ist. Bezüglich eines solchen Transportfahrzeugs ist erfindungsgemäß vorgesehen, dass dieses eine Hebeeinrichtung aufweist, die geeignet ist, vorgefertigte Strangsegmente einer gasisolierten elektrischen Übertragungsleitung unter Beibehaltung ihrer horizontalen Lage anzuheben.

Die Erfindung wird nachfolgend anhand von Ausführungsbeispielen näher erläutert; dabei zeigen beispielhaft
- Figur 1: in einer Seitenansicht einen Abschnitt eines Tunnels, in dem Leitungsmodule unter Bildung von Strangsegmenten verbunden werden, bevor die Strangsegmente zu ihren individuell vorgegebenen Einbauplätzen innerhalb des Tunnels transportiert werden,
- Figur 2: in einer Seitenansicht näher im Detail ein Ausführungsbeispiel für ein Schienenfahrzeug, das zum Transport vorgefertigter Strangsegmente zu Einbauplätzen genutzt werden kann,
- Figur 3: in einem Querschnitt einen Abschnitt eines Tunnels, in dem vorgefertigte Strangsegmente bereits an ihren individuell vorgegebenen Einbauplätzen montiert worden sind sowie ein im Tunnel befindliches Schienenfahrzeug zum Transport vorgefertigter Strangsegmente,
- Figur 4: in einem Querschnitt beispielhaft das Anheben und seitliche Verschieben vorgefertigter Strangsegmente zum Einsetzen in den jeweiligen Einbauplatz,
- Figur 5: in einer Seitenansicht das Anheben der Strangsegmente näher im Detail,
- Figur 6: ein Ausführungsbeispiel für ein Verfahren, bei dem an einem unterirdischen Fertigungsplatz zwei oder mehr Fertigungsabschnitte zum Herstellen zweier oder mehr vorgefertigter Strangsegmente vorhanden sind,
- Figur 7: in einer Seitenansicht beispielhaft ein Vorfertigen von Strangsegmenten an einem oberirdischen Fertigungsplatz sowie das Transportieren der dort vorgefertigten Strangsegmente durch eine oberirdische Tunnelöffnung hindurch in einen Tunnel hinein und
- Figur 8: in einer Draufsicht einen oberirdischen Fertigungsplatz zum zeitlich parallelen Herstellen zweier oder mehrerer Strangsegmente aus Leitungsmodulen, bevor die Strangsegmente mittels eines Transportfahrzeugs, insbesondere eines Schienenfahrzeugs, in einen Tunnel hineingefahren bzw. hineintransportiert werden.

In den Figuren werden der Übersicht halber für identische oder vergleichbare Komponenten stets dieselben Bezugszeichen verwendet.

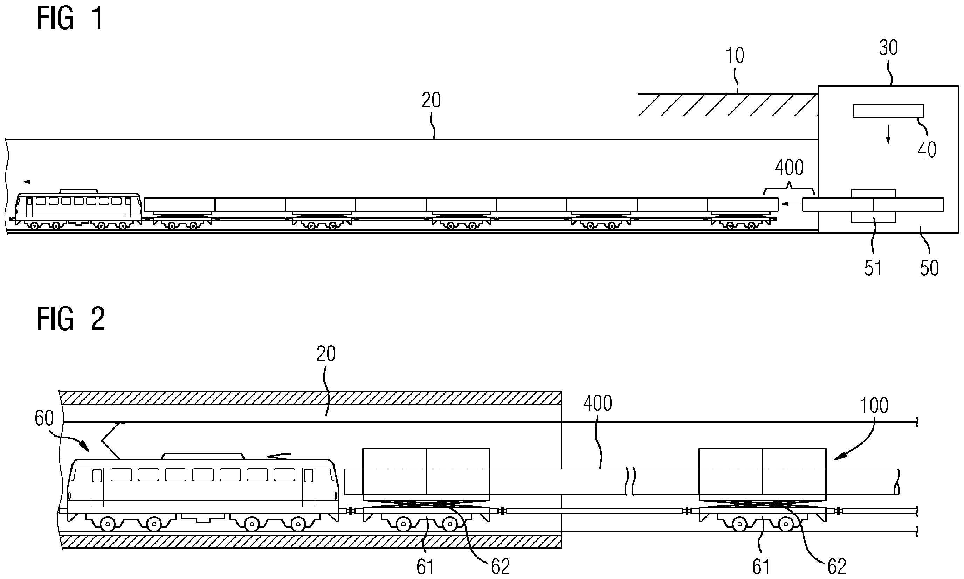

Die Figur 1 zeigt in einer schematischen Seitenansicht einen unterhalb der Erdoberfläche 10 befindlichen Tunnel 20, der über einen Schacht 30 zugänglich ist. Über den Schacht 30 können von außen Leitungsmodule 40 zu einem unterirdischen Fertigungsplatz 50 transportiert werden. An dem unterirdischen Fertigungsplatz 50 werden die angelieferten Leitungsmodule 40 unter Bildung von Strangsegmenten 400 zusammengesetzt, beispielsweise verschweißt. Für das Verschweißen sind im Fertigungsplatz 50 geeignete Schweißvorrichtungen 51 vorhanden.

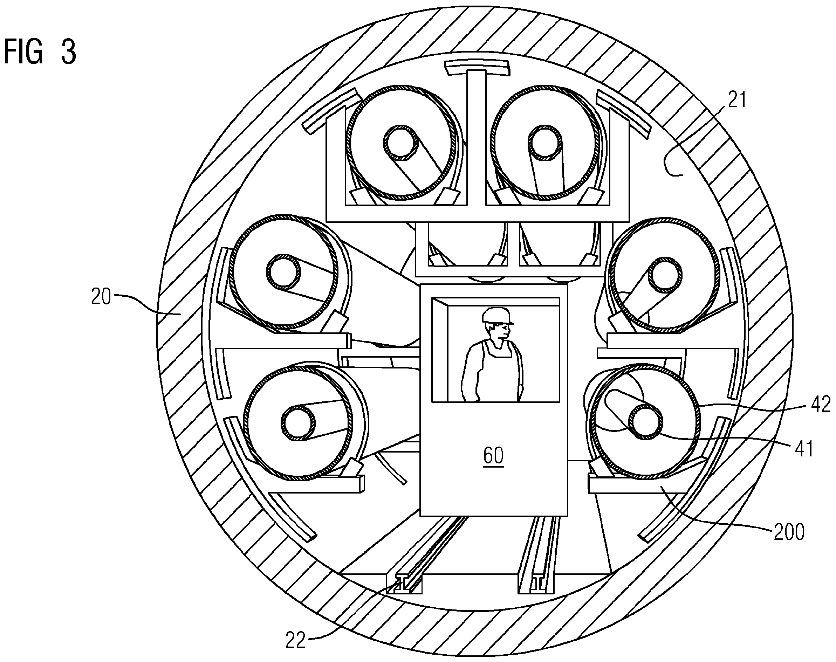

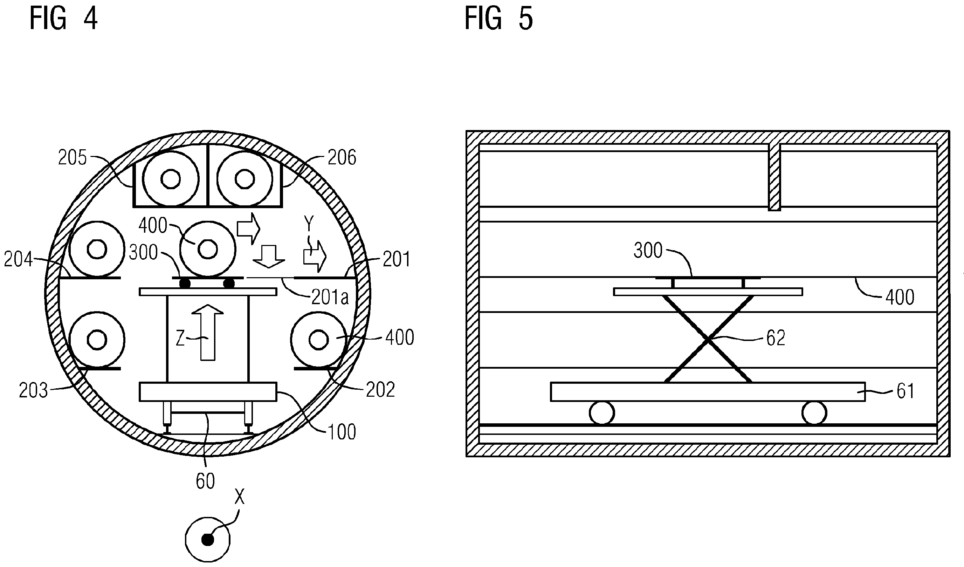

Die Leitungsmodule 40 weisen vorzugsweise eine Länge zwischen 5 und 15 Meter, insbesondere zwischen 10 und 15 Meter, auf und werden im Rahmen der Vorfertigung zu Strangsegmenten 400 mit einer Länge zwischen 100 und 1000 Meter, insbesondere zwischen 300 und 500 Meter, zusammengeschweißt; im Rahmen des Zusammensetzens der Leitungsmodule 40 werden Innenrohre 41 und Mantelrohre 42 (siehe Figuren 3 und 4) der Strangsegmente 40 elektrisch miteinander verbunden.

Die am Fertigungsplatz 50 vorgefertigten Strangsegmente 400 werden zwecks Transport zu einem individuell vorgegebenen Einbauplatz jeweils auf einem geeigneten Fahrzeug, insbesondere Schienenfahrzeug 60, abgelegt. Das Schienenfahrzeug 60 transportiert die vorgefertigten Strangsegmente 400 nachfolgend zum jeweiligen Einbauplatz. Das Zusammensetzen der Strangsegmente 400 am Einbauort erfolgt vorzugsweise durch Verschrauben, insbesondere durch das Verschrauben von Flanschverbindungen.

Die Figur 2 zeigt ein Ausführungsbeispiel für ein geeignetes Schienenfahrzeug 60 näher im Detail. Es lässt sich erkennen, dass das Schienenfahrzeug 60 eine Vielzahl an miteinander verkuppelten Waggons 61 aufweist, die gemeinsam ein vorgefertigtes Strangsegment 400 tragen.

Die verkuppelten Waggons 61 weisen jeweils ein Hebemodul 62 auf, das zum Anheben des darüber befindlichen Abschnitts des Strangsegments 400 geeignet ist. Die Hebemodule 62 der verkuppelten Waggons 61 bilden gemeinsam eine fahrzeugseitige Hebeeinrichtung 100, die ein Anheben des vom Schienenfahrzeug 60 transportierten Strangsegments 400 auf das Höhenniveau eines ggf. höher liegenden Einbauplatzes ermöglichen.

Die Figur 3 zeigt einen Abschnitt eines Tunnels 20 im Querschnitt näher im Detail. Es lässt sich erkennen, dass der Tunnel 20 innenwandseitig bzw. an seiner Innenwand 21 mit Aufnahmeeinrichtungen 200 ausgestattet ist, die zum Halten vorgefertigter Strangsegmente 400 an deren jeweiligem Einbauort ausgebildet sind.

Bei dem Querschnitt gemäß Figur 3 ist die Innenwand 21 bereits mit vorgefertigten Strangsegmenten 400 versehen. Es lässt sich erkennen, dass die Strangsegmente 400 bzw. die Leitungsmodule 40, die das jeweilige Strangsegment 400 bilden, jeweils ein Innenrohr 41 sowie ein äußeres Mantelrohr 42 aufweisen. Zur Bildung der Strangsegmente 400 werden die Innenrohre 41 und Mantelrohre 42 jeweils miteinander verbunden, insbesondere mittels der Schweißvorrichtung 51 miteinander verschweißt.

In der Figur 3 lässt sich darüber hinaus ein Schienenfahrzeug 60 erkennen, das auf im Tunnel 20 verlegten Schienen 22 fährt und das jeweils nächste zu verlegende bzw. zu montierende Strangsegment 400 zu dessen Einbauort transportiert.

Die Figur 4 zeigt in einer vereinfachten Querschnittsdarstellung einen Abschnitt des Tunnels 20, in dem ein Strangsegment 400 montiert werden soll. Zur Montage des Strangsegments 400 soll dieses in eine Aufnahmeeinrichtung 201 eingesetzt werden.

Die Figur 4 lässt erkennen, dass die Aufnahmeeinrichtung 201 höhenmäßig über dem Transportniveau des Strangsegments 400 auf dem Schienenfahrzeug 60 liegt, so dass vor einem Einsetzen des Strangsegments 400 in die Aufnahmeeinrichtung 201 ein Anheben erfolgen muss. Das Anheben des Strangsegments 400 geschieht über die fahrzeugseitige Hebeeinrichtung 100 des Schienenfahrzeugs 60, die bereits im Zusammenhang mit der Figur 2 angesprochen wurde. Das vertikale Anheben des Strangsegments 400 ist durch einen Pfeil mit dem Bezugszeichen Z in Figur 4 angedeutet.

Um die Aufnahmeeinrichtung 201 zu erreichen, muss das Strangsegment 400 bei der Darstellung gemäß Figur 4 auch horizontal, also entlang der Pfeilrichtung Y nach rechts, verschoben werden. Zum Verschieben des Strangsegments 400 ist das Schienenfahrzeug 60 vorzugsweise mit einer geeigneten Schiebeeinrichtung 300 ausgestattet.

Um das Einsetzen des Strangsegments 400 in die Aufnahmeeinrichtung 201 zu vereinfachen, wird es als vorteilhaft angesehen, wenn die Aufnahmeeinrichtung 201 mit einem Teleskopausleger 201a ausgestattet ist, der vor dem horizontalen Bewegen bzw. dem horizontalen Einschieben des Strangsegments 400 entlang der Pfeilrichtung Y ausgefahren wird. Der Teleskopausleger 201a stützt das Einschieben des Strangsegments 400 ab und unterstützt somit das Einsetzen in die Aufnahmeeinrichtung 201.

Die in der Figur 4 mit den Bezugszeichen 202, 203 und 204 gekennzeichneten Aufnahmeeinrichtungen sind vorzugsweise ebenfalls mit entsprechenden Teleskopauslegern ausgestattet; die letztgenannten Teleskopausleger sind jedoch bei der Darstellung gemäß Figur 4 nicht sichtbar, da die Strangsegmente dort bereits eingesetzt worden sind und die Teleskopausleger demgemäß wieder eingefahren worden sind.

Die in der Figur 4 mit dem Bezugszeichen 205 und 206 gekennzeichneten Aufnahmeeinrichtungen sind anders ausgestaltet als die Aufnahmeeinrichtungen 201 bis 204. So lässt sich in der Figur 4 erkennen, dass die Aufnahmeeinrichtung 205 und 206 ein Einsetzen der Strangsegmente 400 allein durch ein horizontales Verschieben entlang der Pfeilrichtung Y nicht ermöglichen würden.

Um das Einsetzen der vorgefertigten Strangsegmente 400 möglichst einfach zu gestalten, ist die Schiebeeinrichtung 300 des Schienenfahrzeugs 60 gemäß Figur 4 vorzugsweise zusätzlich geeignet bzw. dazu ausgestaltet, ein aufliegendes Strangsegment 400 nicht nur horizontal (siehe Pfeilrichtung Y) innerhalb der Querschnittsebene des Tunnels 20 zu verfahren, sondern auch senkrecht zur Querschnittsebene bzw. entlang der Tunnellängsrichtung, also in die Bildebene gemäß Figur 4 hinein oder aus der Bildebene gemäß Figur 4 heraus. Ein solches Verschieben der Strangsegmente 400 ist in der Figur 4 durch einen aus der Bildebene der Figur 4 herausragenden Pfeil mit dem Bezugszeichen X gekennzeichnet.

Die Figur 5 zeigt einen der verkuppelten Waggons 61 gemäß Figur 2 des Schienenfahrzeugs 60 näher im Detail. Es lässt sich das Hebemodul 62 erkennen, das gemeinsam mit anderen Hebemodulen des Schienenfahrzeugs 60 die fahrzeugseitige Hebeeinrichtung 100 gemäß Figur 4 bildet und dazu geeignet ist, den von ihm abgestützten Abschnitt des Strangsegments 60 entlang der Pfeilrichtung Y anzuheben. Das Hebemodul 62 kann beispielsweise durch ein Scherenmodul oder dergleichen gebildet sein.

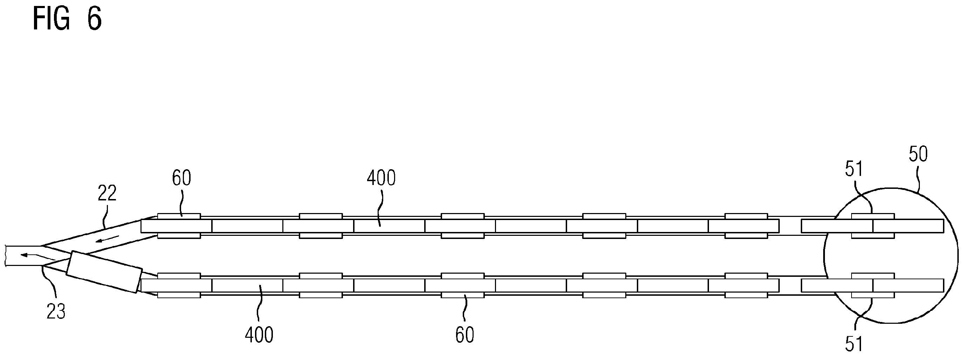

Die Figur 6 zeigt - in einer Draufsicht - einen unterirdischen Fertigungsplatz 50, der ein paralleles Vorfertigen mehrerer Strangsegmente 400 ermöglicht. Zu diesem Zweck weist der Fertigungsplatz 50 mehrere Schweißvorrichtungen 51 auf, die parallel betrieben werden können.

Die verschweißten Leitungsmodule 40 bzw. die Strangsegmente 400 werden auf zugeordneten Schienenfahrzeugen 60 abgelegt, die einen Transport zum jeweiligen Einbauplatz innerhalb des Tunnels 60 ermöglichen. Um das Einfahren der Schienenfahrzeuge 60 in den Zug zu ermöglichen, ist eine Weiche 23 im Tunnel 20 vorgesehen.

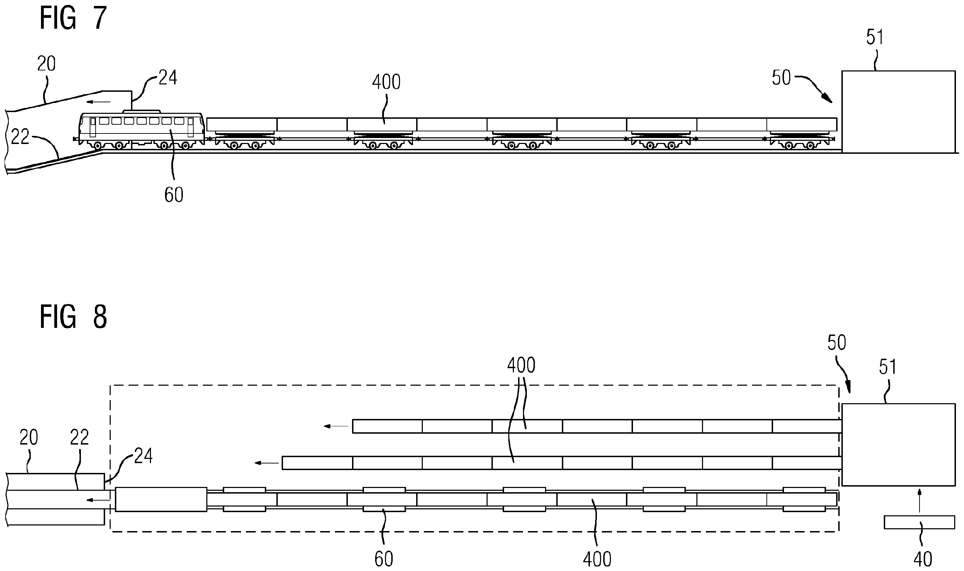

Die Figur 7 zeigt in einer schematischen Darstellung von der Seite einen oberirdischen Fertigungsplatz 50, der eine Vorfertigung von Strangsegmenten durch Verbinden, insbesondere Verschweißen, von Leitungsmodulen 40 ermöglicht, wie dies im Zusammenhang mit den unterirdischen Fertigungsplätzen gemäß den Figuren 1 und 6 bereits näher erläutert worden ist.

Die oberirdisch gefertigten Strangsegmente 400 werden über ein geeignetes Transportfahrzeug, insbesondere ein Schienenfahrzeug 60, an einer oberirdischen Tunnelöffnung 24 in den Tunnel 20 eingefahren und mittels des Schienenfahrzeugs 60 zu ihrem jeweils individuell vorgegebenen Einbauplatz transportiert.

Die Figur 8 zeigt einen oberirdischen Fertigungsplatz 50, bei dem eine oder mehrere Schweißvorrichtungen 51 ein zeitlich paralleles Vorfertigen zweier oder mehrerer Strangsegmente 400 ermöglichen. Die vorgefertigten Strangsegmente 400 werden auf zugeordneten Schienenfahrzeugen 60, von denen aus Gründen der Übersicht in der Figur 8 lediglich ein einziges dargestellt ist, abgelegt und nachfolgend mittels des jeweils zugeordneten Schienenfahrzeugs 60 über Schienen 22 an einer oberirdischen Tunnelöffnung 24 in den Tunnel 20 eingefahren. Eine Weiche, die das Einfahren und Ausfahren der Schienenfahrzeuge 60 zeitlich nacheinander in den Tunnel 20 ermöglicht, ist aus Gründen der Übersicht nicht näher dargestellt.

### Bezugszeichenliste

- 10: Erdoberfläche
- 20: Tunnel
- 21: Innenwand
- 22: Schienen
- 23: Weiche
- 24: Tunnelende / Tunnelöffnung
- 30: Schacht
- 40: Leitungsmodule
- 41: Innenrohr
- 42: Mantelrohr
- 50: Fertigungsplatz
- 51: Schweißvorrichtungen
- 60: Schienenfahrzeug
- 61: Waggons
- 62: Hebemodul
- 100: Hebeeinrichtung
- 200: Aufnahmeeinrichtungen
- 201-206: Aufnahmeeinrichtungen
- 201a: Teleskopausleger
- 300: Schiebeeinrichtung
- 400: Strangsegmente

- X: Pfeilrichtung
- Y: Pfeilrichtung
- Z: Pfeilrichtung

## Patentansprüche

1. Verfahren zum Installieren einer gasisolierten elektrischen Übertragungsleitung in einem Tunnel (20), wobei bei dem Verfahren eine Vielzahl an Leitungsmodulen (40) unter Bildung der Übertragungsleitung zusammengesetzt werden,
**dadurch gekennzeichnet, dass**
- in einem Vorfertigungsschritt Gruppen von Leitungsmodulen (40) unter Bildung von Strangsegmenten (400) verbunden werden,
- die vorgefertigten Strangsegmente (400) zu ihren individuell vorgegebenen Einbauplätzen innerhalb des Tunnels (20) transportiert werden und
- die beiden Strangenden der Strangsegmente (400) im Tunnel (20) jeweils mit den Strangenden der davor und dahinter liegenden Strangsegmente (400) verbunden werden, wobei
- die Leitungsmodule (40) eine Länge zwischen 5 und 15 Meter aufweisen und im Rahmen der Vorfertigung Strangsegmente (400) mit einer Länge zwischen 100 und 1000 Meter gefertigt werden, wobei die Leitungsmodule (40) jeweils ein innen liegendes Innenrohr (41) und ein Mantelrohr (42) aufweisen und im Rahmen der Vormontage jeweils die Innenrohre (41) und die Mantelrohre (42) der Leitungsmodule (40) elektrisch miteinander verbunden werden und im Rahmen des Verbindens der Strangsegmente (400) im Tunnel (20) die Innenrohre (41) und die Mantelrohre (42) der Strangsegmente (400) elektrisch miteinander verbunden werden.

2. Verfahren nach Anspruch 1,
**dadurch gekennzeichnet, dass** die Strangsegmente (400) mit einem Transportfahrzeug nacheinander an ihren jeweiligen Einbauplatz gefahren werden und jeweils nach Erreichen ihres Einbauplatzes mit ihrem einen Strangende mit dem Strangende des davor liegenden Strangsegments (400) verbunden, insbesondere verschraubt, werden.

3. Verfahren nach einem der voranstehenden Ansprüche,
**dadurch gekennzeichnet, dass**
- im Tunnel (20) Schienen (22) verlegt sind und
- die Strangsegmente (400) mit einem Schienenfahrzeug (60) an ihren jeweiligen Einbauplatz gefahren werden.

4. Verfahren nach einem der voranstehenden Ansprüche,
**dadurch gekennzeichnet, dass**
- das Transportfahrzeug eine Hebeeinrichtung (100) aufweist und
- die Strangsegmente (400) mittels der Hebeeinrichtung (100) in ihre jeweils im Tunnel (20) vorgesehene Einbauhöhe angehoben werden.

5. Verfahren nach einem der voranstehenden Ansprüche,
**dadurch gekennzeichnet, dass**
- die Strangsegmente (400) mit dem Transportfahrzeug zunächst an ihren jeweiligen Einbauplatz gefahren werden und
- anschließend an ihrem Einbauplatz mittels einer fahrzeugseitigen Hebeeinrichtung (100) jeweils in ihre vorgesehene Einbauhöhe angehoben werden, sofern die Transporthöhe auf dem Fahrzeug kleiner ist als die Einbauhöhe.

6. Verfahren nach einem der voranstehenden Ansprüche,
**dadurch gekennzeichnet, dass**
- der Tunnel (20) innenwandseitig mit Aufnahmeeinrichtungen (200-206) ausgestattet ist, die zum Halten der Strangsegmente (400) an deren jeweiligem Einbauort ausgebildet sind und
- die Strangsegmente (400) nach Transport zum Einbauort in die Aufnahmeeinrichtungen (200-206) eingesetzt werden.

7. Verfahren nach einem der voranstehenden Ansprüche,
**dadurch gekennzeichnet, dass** die Strangsegmente (400) im Rahmen des Einsetzens in die Aufnahmeeinrichtungen (200-206) vertikal angehoben und/oder horizontal bewegt und/oder in Tunnellängsrichtung (X) bewegt werden.

8. Verfahren nach einem der voranstehenden Ansprüche,
**dadurch gekennzeichnet, dass** im Rahmen des Einsetzens der Strangsegmente (400) in die Aufnahmeeinrichtungen (200-206) die Strangsegmente (400) mittels des Transportfahrzeugs und/oder mittels der Aufnahmeeinrichtungen (200-206) horizontal verschoben werden.

9. Verfahren nach einem der voranstehenden Ansprüche,
**dadurch gekennzeichnet, dass**
- die Aufnahmeeinrichtungen (200-206) Teleskopausleger (201a) aufweisen,
- die Teleskopausleger (201a) vor dem horizontalen Bewegen der Strangsegmente (400) ausgefahren werden und
- die Strangsegmente (400) horizontal auf die ausgefahrenen Teleskopausleger (201a) aufgeschoben werden.

10. Verfahren nach einem der voranstehenden Ansprüche,
**dadurch gekennzeichnet, dass** im Rahmen des Einsetzens der Strangsegmente (400) in die Aufnahmeeinrichtungen (200-206) die Strangsegmente (400) mittels einer Hebeeinrichtung (100) des Transportfahrzeugs zunächst angehoben und anschließen in Tunnellängsrichtung bewegt, insbesondere verschoben, werden.

11. Verfahren nach einem der voranstehenden Ansprüche,
**dadurch gekennzeichnet, dass** der Vorfertigungsschritt an einem unterirdischen Fertigungsplatz (50) erfolgt, der mit dem Tunnel (20) in Verbindung steht oder einen Teilabschnitt des Tunnels (20) bildet.

12. Verfahren nach einem der voranstehenden Ansprüche,
**dadurch gekennzeichnet, dass** der Vorfertigungsschritt an einem oberirdischen Fertigungsplatz (50) erfolgt und die Strangsegmente (400) an einem oberirdischen Tunnelende (24) in den Tunnel (20) hineintransportiert werden.

13. Verfahren nach einem der voranstehenden Ansprüche,
**dadurch gekennzeichnet, dass**
- in dem Vorfertigungsschritt mit den genannten Gruppen von Leitungsmodulen (40) jeweils Strangsegmente (400) gebildet werden, die in der Übertragungsleitung innere Strangsegmente (400) bilden, und
- in dem Vorfertigungsschritt mit zwei weiteren Gruppen von Leitungsmodulen (40) außerdem zwei Strangsegmente (400) gebildet werden, die in der Übertragungsleitung äußere Strangsegmente (400) bilden,
- wobei die inneren Strangsegmente (400) jeweils mit dem Strangende des vorgelagerten Strangsegments (400) und dem Strangende des jeweils nachgelagerten Strangsegments (400) verbunden werden, und
- die beiden äußeren Strangsegmente (400) jeweils nur mit dem zugeordneten vor- oder nachgelagerten Strangsegment verbunden werden.

14. Transportfahrzeug für ein Verfahren nach einem der voranstehenden Ansprüche,
**dadurch gekennzeichnet, dass** das Transportfahrzeug eine Hebeeinrichtung (100) aufweist, die geeignet ist, vorgefertigte Strangsegmente (400) einer gasisolierten elektrischen Übertragungsleitung unter Beibehaltung ihrer horizontalen Lage anzuheben.

## Claims

1. Method for installing a gas-insulated electrical transmission line a tunnel (20), wherein, in the method, a plurality of line modules (40) are assembled to form the transmission line,
**characterized in that**
- in a prefabrication step, groups of line modules (40) are connected to form strand segments (400),
- the prefabricated strand segments (400) are transported to their individually predetermined installation locations within the tunnel (20), and
- the two strand ends of the strand segments (400) are each connected in the tunnel (20) to the strand ends of the strand segments (400) situated in front and behind, wherein
- the line modules (40) have a length between 5 and 15 metres and, for the purpose of the prefabrication, strand segments (400) are produced with a length between 100 and 1000 metres, wherein the line modules (40) each have an internal inner tube (41) and a jacket tube (42) and, for the purpose of the preassembly, the inner tubes (41) and the jacket tubes (42) of the line modules (40) are each electrically connected to one another and, for the purpose of connecting the strand segments (400) in the tunnel (20), the inner tubes (41) and the jacket tubes (42) of the strand segments (400) are electrically connected to one another.

2. Method according to Claim 1,
**characterized in that**
the strand segments (400) are moved in succession by a transport vehicle to their respective installation location and, after reaching their installation location, are each connected, in particular screwed, by one of their strand ends to the strand end of the strand segment (400) situated in front.

3. Method according to either of the preceding claims, **characterized in that**
- rails (22) are laid in the tunnel (20), and
- the strand segments (400) are moved by a rail vehicle (60) to their respective installation location.

4. Method according to one of the preceding claims, **characterized in that**
- the transport vehicle has a lifting device (100), and
- the strand segments (400) are lifted by means of the lifting device (100) to their installation height respectively provided in the tunnel (20).

5. Method according to one of the preceding claims, **characterized in that**
- the strand segments (400) are first moved by the transport vehicle to their respective installation location, and
- are then each lifted at their installation location to their intended installation height by means of a vehicle-borne lifting device (100) if the transport height on the vehicle is less than the installation height.

6. Method according to one of the preceding claims, **characterized in that**
- the tunnel (20) is equipped on the inner wall side with receiving devices (200-206) which are designed for holding the strand segments (400) at their respective installation site, and
- after transport to the installation site, the strand segments (400) are inserted into the receiving devices (200-206) .

7. Method according to one of the preceding claims, **characterized in that**
for the purpose of insertion into the receiving devices (200-206), the strand segments (400) are lifted vertically and/or moved horizontally and/or moved in the tunnel longitudinal direction (X).

8. Method according to one of the preceding claims, **characterized in that**
for the purpose of inserting the strand segments (400) into the receiving device (200-206), the strand segments (400) are horizontally displaced by means of the transport vehicle and/or by means of the receiving devices (200-206).

9. Method according to one of the preceding claims, **characterized in that**
- the receiving devices (200-206) have telescopic arms (201a),
- the telescopic arms (201a) are extended before the horizontal movement of the strand segments (400), and
- the strand segments (400) are pushed horizontally onto the extended telescopic arms (201a).

10. Method according to one of the preceding claims, **characterized in that**
for the purpose of inserting the strand segments (400) into the receiving devices (200-206), the strand segments (400) are first lifted by means of a lifting device (100) of the transport vehicle and then moved, in particular displaced, in the tunnel longitudinal direction.

11. Method according to one of the preceding claims, **characterized in that**
the prefabrication step occurs at an underground production site (50) which is connected to the tunnel (20) or forms a sub-portion of the tunnel (20).

12. Method according to one of the preceding claims, **characterized in that**
the prefabrication step occurs at an above-ground production site (50) and the strand segments (400) are transported at an above-ground tunnel end (24) into the tunnel (20).

13. Method according to one of the preceding claims, **characterized in that**
- in the prefabrication step, strand elements (400) are each formed with the aforementioned groups of line modules (40) and form inner strand segments (400) in the transmission line, and
- in the prefabrication step, in addition two strand segments (400) are formed with two further groups of line modules (40) and form outer strand segments (400) in the transmission line,
- wherein the inner strand segments (400) are each connected to the strand end of the upstream strand segment (400) and to the strand end of the respective downstream strand segment (400), and
- the two outer strand segments (400) are each connected only to the associated upstream or downstream strand segment.

14. Transport vehicle for a method according to one of the preceding claims,
**characterized in that**
the transport vehicle has a lifting device (100) which is suitable for lifting prefabricated strand segments (400) of a gas-insulated electrical transmission line while maintaining their horizontal position.

## Revendications

1. Procédé de montage d'une ligne de transport d'électricité à gaz isolant dans un tunnel (20), dans lequel, dans le procédé, on assemble une pluralité de modules (40) de ligne en formant la ligne de transport,
**caractérisé en ce que**
- dans un stade de préfabrication, on relie des modules (40) de ligne en formant des tronçons (400),
- on transporte les tronçons (400) préfabriqués à leurs emplacements de montage donnés à l'avance individuellement dans le tunnel (20) et
- on relie les deux bouts des tronçons (400) dans le tunnel (20), chacun aux bouts des tronçons (400) devant et derrière, dans lequel
- les modules (40) de ligne ont une longueur comprise entre 5 et 15 mètres et, dans le cadre de la préfabrication, on fabrique des tronçons (400) d'une longueur comprise entre 100 et 1000 mètres, les modules de ligne ayant chacun un tuyau (41) intérieur se trouvant à l'intérieur et un tuyau (42) d'enveloppe et, dans le cadre du prémontage, on relie, électriquement entre eux, respectivement, les tuyaux (41) intérieurs et les tuyaux (42) d'enveloppe des modules (40) de ligne et, dans le cadre de la liaison des tronçons (400) dans le tunnel (20), on relie, électriquement entre eux, les tuyaux (41) intérieurs et les tuyaux (42) d'enveloppe des tronçons (400).

2. Procédé suivant la revendication 1,
**caractérisé en ce que**
on conduit les tronçons (400) par un véhicule de transport, les uns après les autres, à leur emplacement de montage respectif et, après avoir atteint le remplacement de montage, on les relie, notamment en les vissant, par leurs bouts (400) au bout du tronçon (400) devant.

3. Procédé suivant l'une des revendications précédentes, **caractérisé en ce que**
- l'on pose des rails (22) dans le tunnel (20) et
- on conduit les tronçons (400) par un véhicule (60) ferroviaire à leur emplacement de montage respectif.

4. Procédé suivant l'une des revendications précédentes, **caractérisé en ce que**
- le véhicule de transport a un dispositif (100) de levage et
- on soulève les tronçons (400) au moyen du dispositif (100) de levage à leur niveau de montage prévu dans le tunnel (20).

5. Procédé suivant l'une des revendications précédentes, **caractérisé en ce que**
- on conduit des tronçons (400) par le véhicule de transport d'abord à leur emplacement de montage respectif et
- ensuite, à leur emplacement de montage, au moyen d'un dispositif (100) de levage sur le véhicule, on les soulève respectivement à leur niveau de montage prévu, dans la mesure où le niveau de transport sur le véhicule est plus bas que le niveau de montage.

6. Procédé suivant l'une des revendications précédentes, **caractérisé en ce que**
- le tunnel (20) est équipé du côté de la paroi intérieure de dispositifs (200 à 206) de réception, constitués pour maintenir les tronçons (400) à leur emplacement de montage respectif et
- on insère les tronçons (400), après le transport à l'emplacement de montage, dans les dispositifs (200 à 206) de réception.

7. Procédé suivant l'une des revendications précédentes, **caractérisé en ce que**
l'on soulève verticalement les tronçons (400) dans le cadre de l'insertion dans les dispositifs (200 à 206) de réception et/ou on les déplace horizontalement et/ou on les déplace dans la direction (X) longitudinale du tunnel.

8. Procédé suivant l'une des revendications précédentes, **caractérisé en ce que**,
dans le cadre de l'insertion des tronçons (400) dans les dispositifs (200 à 206) de réception, on déplace horizontalement les tronçons (400) au moyen du véhicule de transport et/ou au moyen des dispositifs (200 à 206) de réception.

9. Procédé suivant l'une des revendications précédentes, **caractérisé en ce que**
- les dispositifs (200 à 206) de réception ont des flèches (201a) télescopiques,
- on déploie les flèches (201a) télescopiques avant le déplacement horizontal des tronçons (400) et
- on déplace les tronçons (400) horizontalement sur les flèches (201a) télescopiques déployées.

10. Procédé suivant l'une des revendications précédentes, **caractérisé en ce que**,
dans le cadre de l'insertion des tronçons (400) dans les dispositifs (200 à 206) de réception, on soulève d'abord les tronçons (400) au moyen d'un dispositif (100) de levage du véhicule de transport et, ensuite, on les déplace dans la direction longitudinale du tunnel, notamment en translation.

11. Procédé suivant l'une des revendications précédentes, **caractérisé en ce que**
le stade de la préfabrication a lieu dans un emplacement de fabrication sous terre, qui est en liaison avec le tunnel (20) ou qui forme une partie du tunnel (20).

12. Procédé suivant l'une des revendications précédentes, **caractérisé en ce que**
le stade de la préfabrication a lieu à un emplacement (50) de fabrication en surface et on fait entrer les tronçons (400) dans le tunnel (20) à un bout (24) du tunnel en surface.

13. Procédé suivant l'une des revendications précédentes, **caractérisé en ce que**
- dans le stade de la préfabrication, on forme, avec lesdits groupes de modules (40) de ligne, respectivement, des tronçons (400), qui forment, dans la ligne de transport, des tronçons (400) intérieurs, et
- dans le stade de la préfabrication, on forme, avec deux autres groupes de modules (40) de ligne, en outre, deux tronçons (400), qui forment, dans la ligne de transport, des tronçons (400) extérieurs,
- dans lequel on relie les tronçons (400) intérieurs, chacun au bout du tronçon (400) posé devant et le bout du tronçon (400) posé derrière, respectivement, et
- on relie les deux tronçons (400) extérieurs chacun seulement au tronçon associé posé devant ou derrière.

14. Véhicule de transport pour un procédé suivant l'une des revendications précédentes,
**caractérisé en ce que**
le véhicule de transport a un dispositif (100) de levage propre à soulever, tout en conservant leur position horizontale, des tronçons (400) préfabriqués d'une ligne de transport de l'électricité à gaz isolant.
